# EUROPEAN PATENT SPECIFICATION

(11) **EP 3 546 246 B1**
(45) Date of publication and mention of the grant of the patent: **26.05.2021**
(21) Application number: 17873668.2
(22) Date of filing: 20.11.2017
(51) Int. Cl.: B60C 9/18, B60C 9/20, B60C 9/26

(54) **TIRE**
REIFEN
PNEUMATIQUE

(30) Priority: 25.11.2016 JP 2016229367
(43) Date of publication of application: 02.10.2019
(73) Proprietor: Bridgestone Corporation, Tokyo 104-8340 (JP)
(72) Inventor: OTA Saki, Tokyo 104-8340 (JP)
(74) Representative: Oxley, Robin John George
(86) International application number: PCT/JP2017/041607
(87) International publication number: WO 2018/097084

(56) References cited:
- EP-A1- 3 296 126
- JP-A- H09 240 213
- JP-A- H11 321 222
- JP-A- 2004 001 609
- JP-A- 2012 171 421
- JP-A- 2015 006 857

## Description

### TECHNICAL FIELD

The present invention relates to a tire, particularly an improvement of a tire which includes, in a crown portion: a spiral cord layer in which an upper layer and a lower layer are formed by spirally winding a reinforcing cord; and an auxiliary belt layer arranged on an outer side in a tire radial direction of the spiral cord layer.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the outer side in the tire radial direction of a crown portion of a carcass serving as a skeleton member of the tire is commonly adopted. In addition, as another structure of a belt, a configuration in which upper and lower two belt layers are arranged such that their reinforcing cords intersect with each other, the reinforcing cords being folded back at the ends of the respective belt layers and configured to have a spirally wound structure in which the reinforcing cords extend from one belt layer to the other, is also known.

As such a structure, for example, Patent Document 1 discloses a pneumatic radial tire in which a belt structure constituted by an annular core belt layer formed by winding a reinforcing cord at an angle of substantially 0° with respect to the tire circumferential direction and a covering belt layer formed by spirally winding a reinforcing cord around the core belt layer is arranged on the outer peripheral side of a carcass layer in a tread portion, and it is also disclosed therein that a belt protective layer is arranged as required on the outer peripheral side of the belt structure.

### RELATED ART DOCUMENT

PATENT DOCUMENT[Patent Document 1] JP2004-001609A. Attention is also drawn to the disclosures of JP H09 240213, JP2002 171421 and WO2016/181728.

### SUMMARY OF THE INVENTION

### PROBLEMS TO BE SOLVED BY THE INVENTION

As disclosed in Patent Document 1, it has been known to arrange a spiral cord layer, which is substantially constituted by upper and lower two layers formed by spirally winding a reinforcing cord, on the outer peripheral side of a carcass layer. However, in such a spiral cord layer, since the reinforcing cords of the upper layer and the lower layer are continuous with one another, the spiral cord layer during traveling exhibits a behavior different from those of ordinary intersecting belt layers formed by laminating two independent belt layers.

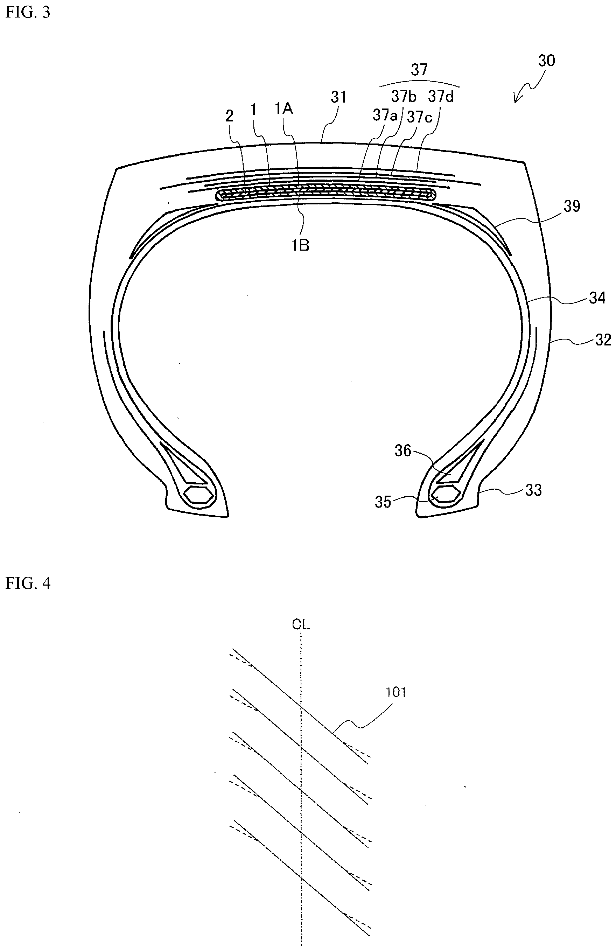

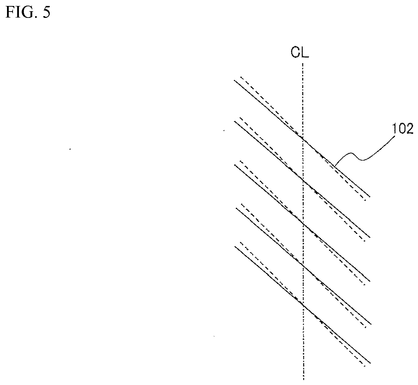

In other words, in ordinary intersecting belt layers, an upper layer and a lower layer are separated at their ends in the tire width direction; therefore, even when inputs are repeatedly applied in the tire circumferential direction during traveling, as illustrated in FIG. 4, substantially only the ends in the tire width direction of a reinforcing cord 101 are displaced in the tire width direction while the angle of the reinforcing cord 101 itself does not change in the vicinity of the center part in the tire width direction near the tire equatorial plane CL. On the other hand, in the case of a spiral cord layer in which the reinforcing cords of an upper layer and a lower layer are continuous with each other, the reinforcing cords impose a stress to each other between the upper and lower layers when inputs are repeatedly applied in the tire circumferential direction during traveling; therefore, as illustrated in FIG. 5, the angle of a reinforcing cord 102 changes over the entirety of the tire width direction centering on the tire equatorial plane CL, as a result of which the whole spiral cord layer is displaced in the tire circumferential direction.

Accordingly, when an auxiliary belt layer is arranged on the outer peripheral side of this spiral cord layer, generation of strains between the spiral cord layer and the auxiliary belt layer causes problems. When an auxiliary belt layer is arranged on intersecting belt layers as described above, since the intersecting belt layers are not displaced as a whole, such generation of interlayer strains does not present a problem and is thus considered as a problem unique to those cases where a spiral cord layer is arranged in place of intersecting belt layers.

When strains are generated between the spiral cord layer and the auxiliary belt layer, the strains induce separation of the layers along the edges of their laminated part, and this may cause a failure. Therefore, a technology for inhibiting such a failure by suppressing the occurrence of separation is demanded.

In view of the above, an object of the present invention is to provide a technology for suppressing, in a tire including a spiral cord layer and an auxiliary belt layer, the occurrence of separation between the spiral cord layer and the auxiliary belt layer.

### MEANS FOR SOLVING THE PROBLEMS

The present inventor intensively studied to solve the above-described problems and consequently discovered that the problems can be solved by defining a modulus of a rubber between a spiral cord layer and an auxiliary belt layer to be a prescribed value, thereby completing the present invention.

That is, the tire of the present invention is a tire including: a carcass toroidally extending between a pair of bead portions; a spiral cord layer arranged on an outer side in a tire radial direction of a crown portion of the carcass and in which an upper layer and a lower layer are formed by spirally winding reinforcing cords; and an auxiliary belt layer arranged on the outer side in the tire radial direction of the spiral cord layer, wherein at least at ends in a tire width direction of a region where the spiral cord layer and the auxiliary belt layer are laminated, a 100% modulus of at least a rubber other than a coating rubber of the auxiliary belt layer among rubbers interposed between the spiral cord layer and the auxiliary belt layer is lower than a 100% modulus of the coating rubber of the auxiliary belt layer,
the tire being characterized by comprising a core-material cord layer between the upper layer and the lower layer of the spiral cord layer

In the tire of the present invention, it is preferred that the tire includes an interlayer rubber between the spiral cord layer and the auxiliary belt layer, and that the 100% modulus of the interlayer rubber be in a range of 20 to 95% of the 100% modulus of the coating rubber of the auxiliary belt layer. Still further, in the tire of the present invention, an angle of the reinforcing cords of the spiral cord layer is preferably in a range of 12° to 90° with respect to the tire circumferential direction. Preferably, the core-material cords of the core-material cord layer have an inclination angle of 40° to 90° with respect to the tire circumferential direction.

### EFFECTS OF THE INVENTION

According to the present invention, a tire including a spiral cord layer and an auxiliary belt layer, in which the occurrence of separation between the spiral cord layer and the auxiliary belt layer is suppressed and the occurrence of a failure attributed to the spiral cord layer is thereby inhibited, can be realized.

### BRIEF DESCRIPTION OF THE DRAWINGS

[FIG. 1] FIG. 1 is a cross-sectional view in a tire width direction illustrating one configuration example of a tire for trucks and buses according to the present invention.
[FIG. 2] FIG. 2 is a cross-sectional view in a tire width direction illustrating one configuration example of a tire for passenger vehicles according to the present invention.
[FIG. 3] FIG. 3 is a cross-sectional view in a tire width direction illustrating one configuration example of a tire for construction vehicles according to the present invention.
[FIG. 4] FIG. 4 is a drawing illustrating a behavior of an intersecting belt layer to which inputs are repeatedly applied in the tire circumferential direction.
[FIG. 5] FIG. 5 is a drawing illustrating a behavior of a spiral cord layer to which inputs are repeatedly applied in the tire circumferential direction.

### MODE FOR CARRYING OUT THE INVENTION

The present invention will now be described in detail referring to the drawings.

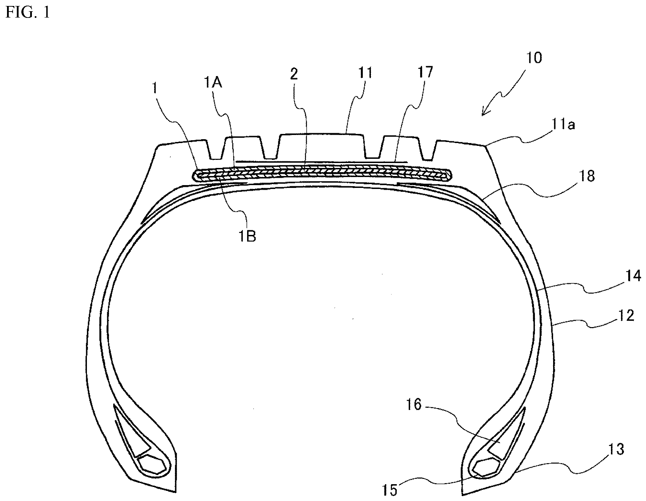

FIG. 1 is a cross-sectional view in a tire width direction illustrating a tire for trucks and buses, which is one example of the tire of the present invention. The illustrated tire 10 includes: a tread portion 11 which forms a ground-contact part; a pair of side wall portions 12 which continuously extend inward in the tire radial direction on both sides of the tread portion 11; and bead portions 13 which continuously extend on an inner circumferential side of each side wall portion 12. The tread portion 11, the side wall portions 12 and the bead portions 13 are reinforced by a carcass 14 composed of a single carcass ply toroidally extending from one bead portion 13 to the other bead portion 13. In the illustrated tire 10 for trucks and buses, bead cores 15 are each embedded in the pair of the bead portions 13, and the carcass 14 is folded around the bead cores 15 from the inside to the outside of the tire and thereby anchored. In addition, bead fillers 16 are arranged on the outer side in the tire radial direction of the respective bead cores 15.

Further, the tire of the present invention sequentially includes, on the outer side in the tire radial direction of a crown portion of the carcass 14: a spiral cord layer 1 having a structure in which an upper layer 1A and a lower layer 1B are formed by spirally winding a reinforcing cords; and an auxiliary belt layer 17.

The present invention is characterized in that, at least at ends in the tire width direction of a region where the spiral cord layer 1 and the auxiliary belt layer 17 are laminated, the 100% modulus of at least a rubber other than a coating rubber of the auxiliary belt layer 17 among rubbers interposed between the spiral cord layer 1 and the auxiliary belt layer 17 is lower than the 100% modulus of the coating rubber of the auxiliary belt layer 17. By defining as described above, even when the whole spiral cord layer 1 is displaced in the tire circumferential direction during traveling, a low-modulus rubber interposed between the spiral cord layer 1 and the auxiliary belt layer 17 deforms and this makes a strain unlikely to be generated in the coating rubber at the ends of auxiliary belt layer 17; therefore, the occurrence of separation initiated between the spiral cord layer 1 and the auxiliary belt layer 17 can be effectively inhibited, whereby the tire durability can be improved.

In the present invention, for example, as a coating rubber of the spiral cord layer 1, a low-modulus rubber whose 100% modulus is lower than the 100% modulus of the coating rubber of the auxiliary belt layer 17 can be used. In the present invention, it is also preferred to arrange an interlayer rubber between the spiral cord layer 1 and the auxiliary belt layer 17 and to control the 100% modulus of this interlayer rubber to be in a range of 20 to 95% of the 100% modulus of the coating rubber of the auxiliary belt layer 17. By arranging such a low-modulus interlayer rubber between the spiral cord layer 1 and the auxiliary belt layer 17, an appropriate rubber gauge can be ensured; therefore, the interlayer rubber easily deforms and a strain applied to the end portions can thereby be largely alleviated, so that the tire durability can be further improved.

The 100% modulus of the interlayer rubber between the spiral cord layer 1 and the auxiliary belt layer 17 can be 20 to 95%, preferably 25 to 80%, of the 100% modulus of the coating rubber of the auxiliary belt layer 17. When the modulus of the interlayer rubber is higher than 95%, since a strain of the interlayer rubber is not sufficiently suppressed, the effect of suppressing the occurrence of separation initiated between the spiral cord layer 1 and the auxiliary belt layer 17 may not be attained sufficiently. Meanwhile, when the modulus of the interlayer rubber is lower than 20%, cracking may occur in the interlayer rubber.

It is noted here that, in the present invention, the term "100% modulus of the interlayer rubber" means the tensile stress at 100% elongation, which is measured for a JIS dumbbell No. 3 sample by performing a tensile test at room temperature (25°C) and a tensile rate of 500 ± 25 mm/min in accordance with JIS K6251.

In the present invention, the term "interlayer rubber between the spiral cord layer 1 and the auxiliary belt layer 17" specifically means a rubber existing between a coating rubber of the reinforcing cords constituting the upper layer 1A of the spiral cord layer 1 and a coating rubber of the belt cords constituting the auxiliary belt layer 17. Accordingly, in the present invention, the interlayer rubber can be arranged by inserting a rubber sheet having an appropriate modulus between the spiral cord layer 1 and the auxiliary belt layer 17.

In the present invention, it is required that the above-described conditions relating to the modulus be satisfied at least at the ends in the tire width direction of a region where the spiral cord layer 1 and the auxiliary belt layer 17 are laminated. By this, an effect of suppressing the occurrence of separation can be attained for the ends in the tire width direction of the spiral cord layer 1 or the auxiliary belt layer 17 where separation is most likely to start from. In the present invention, it is particularly preferred that the above-described conditions relating to the modulus be satisfied in the entirety of the region where the spiral cord layer 1 and the auxiliary belt layer 17 are laminated. By this, strains between the layers can be reduced over the entirety of the region where the spiral cord layer 1 and the auxiliary belt layer 17 are laminated, which is more effective for suppressing the occurrence of separation.

In the tire of the present invention, what is important is only that the above-described conditions relating to the modulus be satisfied at least at the tire width-direction ends of a region where the spiral cord layer 1 and the auxiliary belt layer 17 are laminated, and this enables to attain the expected effects of the present invention. Other configurations are not particularly restricted, and the tire of the present invention can be configured as appropriate in accordance with a conventional method.

In the illustrated example, the spiral cord layer 1 includes a core-material cord layer 2 between the upper layer 1A and the lower layer 1B, i.e., the spiral cord layer 1 is formed by spirally winding reinforcing cords on the core-material cord layer 2. The core-material cord layer 2 may be arranged singly, or a plurality thereof (e.g., 2 to 10) may be laminated. The core-material cord layer 2 is produced by parallelly aligning a large number of core-material cords and subsequently arranging an unvulcanized rubber on top and bottom thereof to coat the core-material cords with the rubber. An end count of the core-material cords in the core-material cord layer 2 is preferably in a range of, for example, 5 to 60 cords/50 mm.

In the present invention, the core-material cords of the core-material cord layer 2 may have an inclination angle of 40° to 90° with respect to the tire circumferential direction. By controlling the angle of the core-material cords to be in this range, the tension of the core-material cords is reduced, so that the core-material cords are given an increased leeway before being fractured. This consequently makes the core-material cords less likely to be fractured even when an input is applied thereto from an obstacle. In order to favorably attain this effect, the inclination angle of the core-material cords of the core-material cord layer 2 is more preferably 50° to 90° with respect to the tire circumferential direction. When a plurality of core-material cord layers 2 are arranged, the plurality of core-material cord layers 2 may constitute intersecting belt layers.

In the present invention, the spiral cord layer 1 is formed by spirally winding a rubber-cord composite obtained by parallelly arranging a single or a plurality of (e.g., 2 to 100) reinforcing cords and coating the resultant with a rubber, in the form of a flat strip, or by spirally winding the rubber-cord composite around the core-material cord layer 2. An end count of the reinforcing cords in the spiral cord layer 1 is preferably in a range of, for example, 5 to 60 cords/50 mm.

Further, in the present invention, an angle of the reinforcing cords of the spiral cord layer 1 is preferably in a range of 12° to 90° with respect to the tire circumferential direction. In the spiral cord layer 1, the upper layer 1A and the lower layer 1B are not separated at their ends in the tire width direction; therefore, the spiral cord layer 1 has characteristics of exhibiting a tension and thus being less likely to grow in diameter when an internal pressure is applied to the tire, and this tends to make the crown portion round as a result. By controlling the angle of the reinforcing cords of the spiral cord layer 1 to be 12° or larger, the growth in diameter at the time of applying an internal pressure can be maintained within an acceptable range, and wearing of shoulder portions can be suppressed. It is noted here that, in the present invention, the angle of the reinforcing cords of the spiral cord layer 1 may be a value measured on the tire equatorial plane. This angle is preferably in a range of 12° to 45° with respect to the tire circumferential direction.

In the present invention, the auxiliary belt layer 17 is formed by parallelly arranging a large number of belt cords and coating the belt cords with a rubber. In the present invention, the angle of the belt cords of the auxiliary belt layer 17 is not particularly restricted. Moreover, the belt cords of the auxiliary belt layer 17 and the reinforcing cords of the upper layer 1A of the adjacent spiral cord layer 1 may be inclined in the same direction or in the opposite directions with respect to the tire circumferential direction.

In the present invention, the material of the reinforcing cords of the spiral cord layer 1 and that of the core-material cords of the core-material cord layer 2 are not particularly restricted, and various metal cords, organic fiber cords and the like that are conventionally and commonly used can be employed as appropriate. Specific examples of the metal cords that can be used include steel filaments and steel cords obtained by twisting a plurality of steel filaments together. In this case, various designs can be adopted for the twist structure of the cords, and various cross-sectional structures, twist pitches, twist directions and distances between adjacent filaments can be employed. As the cross-sectional structures, various twist structures such as single twist, layer twist and multi-twist can be adopted, and cords having a flat cross-sectional shape can be used as well. The steel filaments constituting the steel cords contain iron as a main component and may further contain various trace elements, such as carbon, manganese, silicon, phosphorus, sulfur, copper, and chromium. Moreover, on the surface of the steel filaments, brass plating may be performed for improvement of the adhesion with a rubber.

As organic fibers, for example, aramid fibers (aromatic polyamide fibers), polyketone (PK) fibers, poly-*p*-phenylene benzobisoxazole (PBO) fibers, and polyarylate fibers can be used. In addition, for example, carbon fibers, such as polyacrylonitrile (PAN)-based carbon fibers, pitch-based carbon fibers and rayon-based carbon fibers, as well as glass fibers and rock fibers (rock wool) such as basalt fibers and andesite fibers can also be used. It is noted here that these reinforcing cords be treated with an adhesive so as to improve their adhesion with a rubber. This adhesive treatment can be performed in accordance with a conventional method using a commonly-used adhesive such as an RFL-based adhesive. Further, hybrid cords composed two or more kinds of the above-described fibers may be used as well.

In the present invention, a rubber composition used as a coating rubber of the spiral cord layer 1 and the core-material cord layer 2 is not particularly restricted and any known rubber composition can be used. For example, as a rubber component contained in the rubber composition used as the coating rubber, any known rubber component can be used, and examples thereof include natural rubbers and synthetic rubbers, such as vinyl aromatic hydrocarbon-conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the present invention is not particularly restricted and, the rubber composition can be prepared by, for example, kneading sulfur, an organic acid cobalt salt and various additives into a rubber component using a Banbury mixer, a roll or the like in accordance with a conventional method.

In the illustrated tire 10 for trucks and buses, the auxiliary belt layer 17 can be an inclined belt in which belt cords have a prescribed angle with respect to the tire circumferential direction. As reinforcing cords of the inclined belt layer, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. Further, the width of the auxiliary belt layer 17 is preferably 40% to 115%, particularly preferably 50% to 70%, of the tread width. On the inner side in the tire radial direction of each end of the spiral cord layer 1, it is preferred to arrange a belt under-cushion rubber 18. By this, strain and temperature applied to the ends of the spiral cord layer 1 are reduced, so that the tire durability can be improved.

In the tire 10 for trucks and buses according to the present invention, a variety of constitutions including conventional structures can be adopted for the carcass 14, and the carcass 14 may have a radial structure or a bias structure. The carcass 14 is preferably constituted by one or two carcass plys each composed of a steel cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the outer side in the tire radial direction with respect to the tire height. Moreover, as illustrated, the carcass 14 is generally and preferably configured to extend between the pair of the bead cores 15 without interruption; however, the carcass 14 can also be constituted by a pair of carcass pieces that extend from the respective bead cores 15 and are interrupted in the vicinity of the tread portion 11.

A variety of structures can be adopted for the folded parts of the carcass 14. For example, the folded ends of the carcass 14 can be positioned on the inner side in the tire radial direction than the upper ends of bead fillers 16, and the folded ends of the carcass may extend further on the outer side in the tire radial direction than the upper ends of the bead fillers 16 or the tire maximum-width positions. In this case, the folded ends of the carcass may extend to the inner side in the tire width direction than the ends in the tire width direction of the spiral cord layer 1. Further, in cases where a plurality of carcass plys are arranged, the positions of the folded ends of the carcass 14 in the tire radial direction may be different from each other. Alternatively, the carcass 14 may take a structure in which the carcass 14 is sandwiched by a plurality of bead core members or wound around the bead cores 15, in the absence of folded parts. An end count of the carcass 14 is generally in a range of 5 to 60 cords/50 mm; however, the end count is not restricted thereto.

Further, in the tire 10 for trucks and buses according to the present invention, on the outer side in the tire radial-direction of the spiral cord layer 1 and the auxiliary belt layer 17, a circumferential cord layer (not illustrated) may be arranged as well.

In the tire 10 for trucks and buses according to the present invention, a known structure can be adopted also for the side wall portions 12. For example, the tire maximum-width positions can be arranged in a range of 50% to 90% from each bead base on the outer side in the tire radial-direction with respect to the tire height. In the tire 10 for trucks and buses according to the present invention, it is preferred that the side wall portions 12 be each formed as a smooth curve having a convex shape in the tire width direction without a recess that comes into contact with the rim flange, which is different from the tire for passenger vehicles.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by a plurality of bead core members. In the illustrated tire 10 for trucks and buses, bead fillers 16 are arranged on the outer side in the tire radial direction of the respective bead cores 15, and the bead fillers 16 may each be constituted by a plurality of rubber members that are separated from each other in the tire radial direction.

In the tire 10 for trucks and buses according to the present invention, the tread pattern may be a rib-like land portion dominant pattern, a block pattern or an asymmetrical pattern, and the tread pattern may have a designated rotation direction.

The rib-like land portion dominant pattern is a pattern which is mainly constituted by rib-like land portions that are partitioned in the tire width direction by at least one circumferential groove or by a circumferential groove(s) and tread ends. The term "rib-like land portion" used herein refers to a land portion that extends in the tire circumferential direction without any lateral groove across the tire width direction; however, the rib-like land portion may have a sipe and a lateral groove terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the a plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings. Further, in the tread portion, it is preferred that a corner 11a be formed at each tire width-direction end.

The tire illustrated in FIG. 1 is a tire for trucks and busses; however, the present invention is not restricted thereto and can also be suitably applied to, for example, tires for passenger vehicles, construction vehicles, two-wheeled vehicles, airplanes and agriculture. Further, the tire is not restricted to be a pneumatic tire and can also be applied as a solid tire or a non-pneumatic tire.

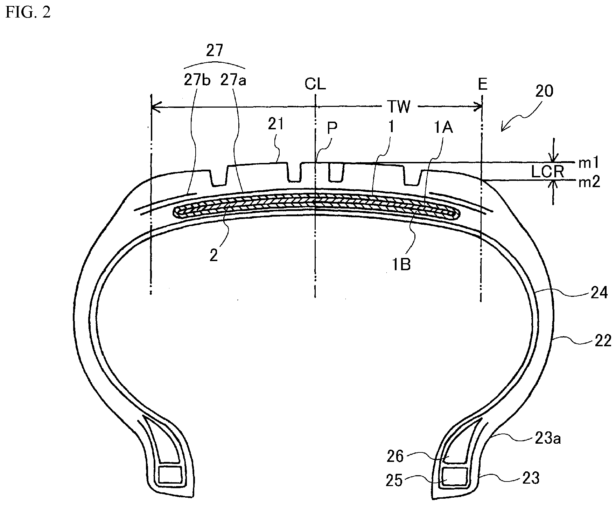

FIG. 2 is a cross-sectional view in the tire width direction illustrating one configuration example of a tire for passenger vehicles according to the present invention. The illustrated tire 20 for passenger vehicles includes: a tread portion 21 which forms a ground-contact part; a pair of side wall portions 22 which continuously extend inward in the tire radial direction on both sides of the tread portion 21; and bead portions 23 which continuously extend on the inner circumferential side of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for passenger vehicles, bead cores 25 are each embedded in the pair of the bead portions 23, and the carcass 24 is folded around the bead cores 25 from the inside to the outside of the tire and thereby anchored. In addition, bead fillers 26 are arranged on the outer side in the tire radial-direction of the respective bead cores 25.

In the illustrated tire 20 for passenger vehicles, on the outer side in the tire radial direction of a crown portion of the carcass 24, a spiral cord layer 1 having a structure in which an upper layer 1A and a lower layer 1B are formed by spirally winding reinforcing cords, and an auxiliary belt layer 27 are sequentially arranged.

In the present invention, it is important that the modulus of a rubber between the spiral cord layer 1 and the auxiliary belt layer 27 satisfy the above-described conditions at least at ends in the tire width direction of a region where the spiral cord layer 1 and the auxiliary belt layer 27 are laminated, and this enables to attain the expected effects of the present invention. In the case of the tire for passenger vehicles illustrated in FIG. 2, examples of the auxiliary belt layer 27 include a cap layer 27a arranged over the entire width or more of the spiral cord layer 1, and a layered layer 27b arranged in the regions that cover the respective ends of the spiral cord layer 1. Usually, the cap layer 27a and the layered layer 27b may each be formed by spirally winding a constant-width strip, which is obtained by paralleling a large number of cords and coating the cords with a rubber, in the tire circumferential direction. The cap layer 27a and the layered layer 27b may each be arranged alone, or both of them may be arranged in combination. Alternatively, the auxiliary belt layer may be a combination of two or more cap layers and/or two or more layered layers. In the present invention, in any of these cases, the modulus of the interlayer rubber between the spiral cord layer 1 and the auxiliary belt layer 27 arranged adjacent thereto on the tire radial-direction outer side presents a problem.

Various materials can be used as the reinforcing cords of the cap layer 27a and the layered layer 27b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting a plurality of filaments together, or hybrid cords obtained by twisting filaments of different materials together can be used as well. Further, in order to increase the breaking strength, wavy cords may also be used as the reinforcing cords. Similarly, for example, high-elongation cords having an elongation at break of 4.5% to 5.5% may be used to increase the breaking strength.

An end count of the cap layer 27a and that of the layered layer 27b are generally in a range of 20 to 60 cords/50 mm; however, the end counts are not restricted thereto. For example, the cap layer 27a may be imparted with distribution in the tire width direction in terms of rigidity, material, number of layers, cord density and the like and, for example, the number of layers can be increased only at the ends in the tire width direction, or only in the central part.

From the production standpoint, it is particularly advantageous to configure the cap layer 27a and the layered layer 27b as spiral layers. In this case, these layers may be constituted by strip-from cords in which a plurality of core wires arranged in parallel to each other in a plane are bundled together by a wrapping wire with the parallel arrangement being maintained.

In the tire 20 for passenger vehicles according to the present invention, a variety of configurations including conventional structures can be adopted for the carcass 24, and the carcass 24 may have a radial structure or a bias structure. The carcass 24 is preferably constituted by one or two carcass plys each composed of an organic fiber cord layer. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the outer side in the tire radial direction with respect to the tire height. Moreover, as illustrated, the carcass 24 is generally and preferably configured to extend between the pair of the bead cores 25 without interruption; however, the carcass 24 can also be constituted by a pair of carcass ply pieces that extend from the respective bead cores 25 and are interrupted in the vicinity of the tread portion 21 (not illustrated).

A variety of structures can be adopted for the folded parts of the carcass 24. For example, the folded ends of the carcass 24 can be positioned on the inner side in the tire radial direction than the upper ends of bead fillers 26, and the folded ends of the carcass 24 may extend further on the outer side in the tire radial direction than the upper ends of the bead fillers 26 or the tire maximum-width positions. In this case, the folded ends of the carcass 24 may extend to the inner side in the tire width direction than the ends in the tire width direction of the spiral cord layer 1. Further, in cases where a plurality of carcass plys are arranged, the positions of the folded ends of the carcass 24 in the tire radial direction may be different from each other. Alternatively, the carcass 24 may take a structure in which the carcass 24 is sandwiched by a plurality of bead core members or wound around the bead cores 25, in the absence of folded parts. An end count of the carcass 24 is generally in a range of 5 to 60 cords/50 mm; however, the end count is not restricted thereto.

With regard to the shape of the tread portion 21 in the tire 20 for passenger vehicles according to the present invention that has a narrow width and a large diameter, when, at a tire widthwise cross-section, a straight line that runs through a point P on the tread in the tire equatorial plane CL and is parallel to the tire width direction is defined as m1, a straight line that runs through a ground-contact end E and is parallel to the tire width direction is defined as m2, the distance between the straight lines m1 and m2 in the tire radial direction is defined as fall height LCR and the tread width of the tire is defined as TW, the ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced and the durability and the wear resistance of the tire can be improved. Further, the tread ends are preferably smooth.

The tread pattern may be a full-lug pattern, a rib-like land portion dominant pattern, a block pattern or an asymmetrical pattern, and the tread pattern may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The rib-like land portion dominant pattern is a pattern which is mainly constituted by rib-like land portions that are partitioned in the tire width direction by at least one circumferential groove or by a circumferential groove(s) and tread ends. The term "rib-like land portion" used herein refers to a land portion that extends in the tire circumferential direction without any lateral groove across the tire width direction; however, the rib-like land portion may have a sipe and a lateral groove terminating within each rib-like land portion. Since a radial tire has a high ground-contact pressure particularly when used at a high internal pressure, it is believed that the ground-contact performance on wet road surfaces is improved by increasing the circumferential shear rigidity. The rib-like land portion dominant pattern can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber or a foamed rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In the tire 20 for passenger vehicles according to the present invention, a known structure can be adopted also for the side wall portions 22. For example, the tire maximum-width positions can be arranged in a range of 50% to 90% from each bead base on the outer side in the tire radial direction with respect to the tire height. Further, a structure including a rim guard may be adopted as well. In the tire 20 for passenger vehicles according to the present invention, it is preferred that a recess 23a, which comes into contact with the rim flange, be formed.

Moreover, a variety of structures, such as a circular shape and a polygonal shape, can be adopted for the bead cores 25. It is noted here that, as described above, the bead portions 23 may have a structure in which the carcass 24 is wound on the bead cores 25, or a structure in which the carcass 24 is sandwiched by a plurality of bead core members. In the illustrated tire 20 for passenger vehicles, bead fillers 26 are arranged on the outer side in the tire radial direction of the respective bead cores 25; however, the bead fillers 26 may be omitted in the tire 20 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer including a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for inhibition of air leakage upon puncture of the tire may be arranged as well.

The use of the tire 20 for passenger vehicles is not particularly restricted. The tire 20 can be suitably used as a summer tire, an all-season tire, or a winter tire. It is also possible to use the tire 20 as a tire for passenger vehicles that has a special structure, such as a side-reinforced run-flat tire having a crescent-shaped reinforcing rubber layer in the side wall portions 22, or a studded tire.

FIG. 3 is a cross-sectional view in a tire width direction illustrating one configuration example of a tire for construction vehicles according to the present invention. The illustrated tire 30 for construction vehicles includes: a tread portion 31 which forms a ground-contact part; a pair of side wall portions 32 which continuously extend inward in the tire radial direction on both sides of the tread portion 31; and bead portions 33 which continuously extend on the inner circumferential side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored. In addition, bead fillers 36 are arranged on the outer side in the tire radial direction of the respective bead cores 35.

In the illustrated tire 30 for construction vehicles, on the outer side in the tire radial direction of a crown portion of the carcass 34, a spiral cord layer 1 having a structure in which an upper layer 1A and a lower layer 1B are formed by spirally winding reinforcing cords, and four belt layers 37a to 37d are sequentially arranged. In the tire 30 for construction vehicles, these four belt layers 37 correspond to the auxiliary belt layer according to the present invention. Generally, a tire for construction vehicles includes 4 to 6 belt layers and, when the tire for construction vehicles includes 6 belt layers, a first and a second belt layers constitute an inner intersecting belt layer group; a third and a fourth belt layers constitute a middle intersecting belt layer group; and a fifth and a sixth belt layers constitute an outer intersecting belt layer group. In the tire for construction vehicles according to the present invention, the inner intersecting belt layer group is replaced with the spiral cord layer 1, and the auxiliary belt layers 37a to 37d are arranged as the middle and the outer intersecting belt layer groups. Meanwhile, in the case of a tire for construction vehicles that includes four belt layers, the first and the second belt layers may be replaced with the spiral cord layer 1, and the third and the fourth belt layers may be the auxiliary belt layers 37a and 37b.

When the tire for construction vehicles includes 6 belt layers, in the tread width direction, the width of the spiral cord layer 1 can be 25% to 70% of the width of the tread; the width of the auxiliary belt layers 37a and 37b can be 55% to 90% of the width of the tread; and the width of the auxiliary belt layers 37c and 37d can be 60% to 110% of the width of the tread. Further, in the tread planar view, the inclination angle of the belt cords of the auxiliary belt layers 37a and 37b can be 50° to 75° with respect to the carcass cords, and the inclination angle of the belt cords of the auxiliary belt layers 37c and 37d can be 70° to 85° with respect to the carcass cords.

In the present invention, it is important that the modulus of a rubber between the spiral cord layer 1 and the auxiliary belt layer 37 satisfy the above-described conditions at least at ends in the tire width direction of a region where the spiral cord layer 1 and the auxiliary belt layer 37 are laminated, and this enables to attain the expected effects of the present invention. In the present invention, the modulus of the rubber between the spiral cord layer 1 and the auxiliary belt layers 37 arranged adjacent thereto on the outer side in the tire radial direction matters, regardless of the number of the auxiliary belt layers 37.

In the tire 30 for construction vehicles according to the present invention, the auxiliary belt layers 37 can be inclined belts which are each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, among the auxiliary belt layers 37, the width of a maximum-width inclined belt layer having the largest width is preferably 90% to 115%, particularly preferably 100% to 105%, of the tread width. On the inner side in the tire radial direction of the respective ends of the auxiliary belt layers 37, it is preferred to arrange a belt under-cushion rubber 39. By this, strain and temperature applied to the ends of the auxiliary belt layers 37 are reduced, so that the tire durability can be improved.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plys each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the outer side in the tire radial direction with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the inner side in the tire radial direction than the upper ends of bead fillers 36, and the folded ends of the carcass 34 may extend further on the outer side in the tire radial direction than the upper ends of the bead fillers 36 or the tire maximum-width positions. In this case, the folded ends of the carcass 34 may extend to the inner side in the tire width direction than the ends in the tire width direction of the spiral cord layer 1. Further, in cases where a plurality of carcass plys are arranged, the positions of the folded ends of the carcass 34 in the tire radial direction may be different from each other. Alternatively, the carcass 34 may take a structure in which the carcass 34 is sandwiched by a plurality of bead core members or wound around the bead cores 35, in the absence of folded parts. An end count of the carcass 34 is generally in a range of 5 to 60 cords/50 mm; however, the end count is not restricted thereto.

In the tire 30 for construction vehicles according to the present invention, a known structure can be adopted also for the side wall portions 32. For example, the tire maximum-width positions can be arranged in a range of 50% to 90% from each bead base on the outer side in the tire radial direction with respect to the tire height. In the tire 30 for construction vehicles according to the present invention, it is preferred that a recess that comes into contact with the rim flange be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by a plurality of bead core members. In the illustrated tire 30 for construction vehicles, bead fillers 36 are arranged on the outer side in the tire radial direction of the respective bead cores 35, and the bead fillers 36 may each be constituted by a plurality of rubber members that are separated from each other in the tire radial direction.

In the tire 30 for construction vehicles according to the present invention, the tread pattern may be a lug pattern, a block pattern or an asymmetrical pattern, and the tread pattern may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern including block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

Reinforcing cords were spirally wound on a single core-material cord layer to prepare a reinforcing member that had a structure including a core-material cord layer between an upper layer and a lower layer of a spiral cord layer. The thus obtained reinforcing member was arranged on the outer side in the tire radial direction of the crown portion of a carcass, and an auxiliary belt layer was further arranged on the t outer side in the ire radial direction of this reinforcing member, whereby tires for trucks and buses as illustrated in FIG. 1 were produced at a tire size of 275/80R22.5.

As core-material cords of the core-material cord layer and belt cords of the auxiliary belt layer, steel cords having a 1+6 structure composed of steel filaments of 1.13 mm in diameter were used. The inclination angle of the steel cords of the core-material cord layer was set at 70° with respect to the longitudinal direction of the reinforcing member. The reinforcing cords of the spiral cord layer and the steel cords of the auxiliary belt layer had an inclination angle of 16° with respect to the longitudinal direction of the reinforcing member.

Further, the inclination direction of the steel cords of the auxiliary belt layer was the same as that of the reinforcing cords of the upper layer of the adjacent spiral cord layer, while the inclination angle of the steel cords the core-material cord layer was opposite thereto. Moreover, the end count of the core-material cord layer and that of the auxiliary belt layer were set at 18.06 cords/50 mm and 24.21/50 mm, respectively.

### <Evaluation of Travel Distance>

The thus obtained test tires were each mounted on a rim, inflated to a prescribed internal pressure, and then subjected to a running test on a drum at a speed of 65 km/h at a room temperature of 38°C with 150% of normal load being applied thereto. The distance traveled until a defect occurred due to separation between the spiral cord layer and the auxiliary belt layer was measured.

### <Cases Where PAN-based Carbon Fiber Cords Were Applied as Reinforcing Cords of Spiral Cord Layer>

The results of cases where PAN-based carbon fiber cords (cord structure: 12,000 dtex/1) were used as the reinforcing cords of the spiral cord layer are shown in Table 1 below. The end count of the spiral cord layer was set at 27.65 cords/50 mm. Table 1 below shows the ratios of the travel distances of Examples and Comparative Examples, taking the travel distance of a case where the 100% modulus of the interlayer rubber between the spiral cord layer and the auxiliary belt layer was equivalent to the 100% modulus of the coating rubber of the auxiliary belt layer as 100. A higher ratio of travel distance indicates a further improvement in the durability of the belt portions.

**[Table 1]**

| | Example 1 | Example 2 | Example 3 | Example 4 | Comparative Example 1 |
|---|---|---|---|---|---|
| Modulus of interlayer rubber between spiral cord layer and auxiliary belt layer (index) ^{*1} | 20 | 50 | 80 | 95 | 105 |
| Travel distance (ratio) | 120 | 110 | 105 | 102 | 98 |

| | | | | | |
|---|---|---|---|---|---|
| ^{*1)} The 100% modulus of the interlayer rubber between the spiral cord layer and the auxiliary belt layer, which was measured at 25°C and is indicated as an index, taking the 100% modulus of the coating rubber of the auxiliary belt layer measured at 25°C as 100. | | | | | |

### <Cases Where Aramid Cords Were Applied as Reinforcing Cords of Spiral Cord Layer>

The results of cases where aramid cords (cord structure: 3,340 dtex//2/3) were used as the reinforcing cords of the spiral cord layer are shown in Table 2 below. The end count of the spiral cord layer was set at 25 cords/50 mm. Table 2 below shows the ratios of the travel distances of Examples and Comparative Examples, taking the travel distance of a case where the 100% modulus of the interlayer rubber between the spiral cord layer and the auxiliary belt layer was equivalent to the 100% modulus of the coating rubber of the auxiliary belt layer as 100. A higher ratio of travel distance indicates a further improvement in the durability of the belt portions.

**[Table 2]**

| | Example 5 | Example 6 | Example 7 | Example 8 | Comparative Example 2 |
|---|---|---|---|---|---|
| Modulus of interlayer rubber between spiral cord layer and auxiliary belt layer (index) ^{* 1} | 20 | 50 | 80 | 95 | 105 |
| Travel distance (ratio) | 119 | 110 | 105 | 102 | 98 |

As shown in Tables above, it was confirmed that, according to the present invention, the occurrence of separation between the spiral cord layer and the auxiliary belt layer can be suppressed.

### DESCRIPTION OF SYMBOLS

1: spiral cord layer
1A: upper layer
1B: lower layer
2: core-material cord layer
10: tire for trucks and buses
11, 21, 31: tread portion
11a: corner
12, 22, 32: side wall portions
13, 23, 33: bead portions
14, 24, 34: carcass
15, 25, 35: bead cores
16, 26, 36: bead fillers
17, 27, 37a to 37d: auxiliary belt layer
27a: cap layer
27b: layered layer
20: tire for passenger vehicles
23a: recess
18, 39: belt under-cushion rubber
30: tire for construction vehicles
101, 102: reinforcing cord

## Claims

1. A tire (10, 20, 30) comprising:
a carcass (14, 24, 34) toroidally extending between a pair of bead portions (13, 23, 33);
a spiral cord layer (1) arranged on an outer side in a tire radial direction of a crown portion of the carcass (14, 24, 34) and in which an upper layer (1A) and a lower layer (1B) are formed by spirally winding a reinforcing cord (101, 102); and
an auxiliary belt layer (17, 27, 37a-d) arranged on the outer side in the tire radial direction of the spiral cord layer (1),
wherein, at least at ends in a tire width direction of a region where the spiral cord layer (1) and the auxiliary belt layer (17, 27, 37a-d) are laminated, a 100% modulus of at least a rubber other than a coating rubber of the auxiliary belt layer (17, 27, 37a-d) among rubbers interposed between the spiral cord layer (1) and the auxiliary belt layer (17, 27, 37a-d) is lower than a 100% modulus of the coating rubber of the auxiliary belt layer (17, 27, 37a-d),
**characterized by** comprising a core-material cord layer (2) between the upper layer (1A) and the lower layer (1B) of said spiral cord layer (1).

2. The tire (10, 20, 30) according to claim 1, wherein
the tire (10, 20, 30) comprises an interlayer rubber between the spiral cord layer (1) and the auxiliary belt layer (17, 27, 37a-d), and
a 100% modulus of the interlayer rubber is in a range of 20 to 95% of the 100% modulus of the coating rubber of the auxiliary belt layer (17, 27, 37a-d),
wherein the term "100% modulus" means the tensile stress at 100% elongation, which is measured for a JIS dumbbell No. 3 sample by performing a tensile test at room temperature (25°C) and a tensile rate of 500 ± 25 mm/min in accordance with JIS K6251.

3. The tire according to claim 1 or 2, wherein an angle of the reinforcing cord of the spiral cord layer (1) is in a range of 12° to 90° with respect to the tire circumferential direction.

4. The tire (10, 20, 30) according to any one of claims 1 to 3, wherein the core-material cords of the core-material cord layer (2) have an inclination of 40° to 90° with respect to the tire circumferential direction.

## Patentansprüche

1. Reifen (10, 20, 30), der Folgendes umfasst:
eine Karkasse (14, 24, 34), die sich kreisringförmig zwischen einem Paar von Wulstabschnitten (13, 23, 33) erstreckt,
eine spiralige Kordlage (1), die auf einer in einer Reifenradialrichtung äußeren Seite eines Scheitelabschnitts der Karkasse (14, 24, 34) angeordnet ist und in der eine obere Lage (1A) und eine untere Lage (1B) durch spiraliges Wickeln eines Verstärkungskords (101, 102) geformt sind, und
eine Zusatz-Gürtellage (17, 27, 37a-d), die auf der in der Reifenradialrichtung äußeren Seite der spiraligen Kordlage (1) angeordnet ist,
wobei, mindestens an Enden in einer Reifenbreitenrichtung eines Bereichs, wo die spiralige Kordlage (1) und die Zusatz-Gürtellage (17, 27, 37a-d) geschichtet sind, ein 100%-Modul mindestens eines anderen Gummis als eines Überzugsgummis der Zusatz-Gürtellage (17, 27, 37a-d) unter Gummis, die zwischen der spiraligen Kordlage (1) und der Zusatz-Gürtellage (17, 27, 37a-d) eingefügt sind, niedriger ist als ein 100%-Modul der Zusatz-Gürtellage (17, 27, 37a-d),
**dadurch gekennzeichnet, dass** er eine Kernmaterial-Kordlage (2) zwischen der oberen Lage (1A) und der unteren Lage (1B) der spiraligen Kordlage (1) umfasst.

2. Reifen (10, 20, 30) nach Anspruch 1, wobei
der Reifen (10, 20, 30) einen Zwischenlagengummi zwischen der spiraligen Kordlage (1) und der Zusatz-Gürtellage (17, 27, 37a-d) umfasst und
ein 100%-Modul des Zwischenlagengummis in einem Bereich von 20 bis 95 % des 100%-Moduls der Zusatz-Gürtellage (17, 27, 37a-d) liegt,
wobei der Begriff "100%-Modul" die Zugspannung bei 100 % Dehnung bedeutet, die für eine JIS-Hantelprobe Nr. 3 durch Durchführen einer Zugprüfung bei Raumtemperatur (25 °C) und einer Zuggeschwindigkeit von 500 ± 29 mm/min nach JIS K6251 gemessen wird.

3. Reifen (10, 20, 30) nach Anspruch 1 oder 2, wobei ein Winkel des Verstärkungskords der spiraligen Kordlage (1) in einem Bereich von 12° bis 90° in Bezug auf die Reifenumfangsrichtung liegt.

4. Reifen (10, 20, 30) nach einem der Ansprüche 1 bis 3, wobei die Kernmaterial-Kords der Kernmaterial-Kordlage (2) eine Neigung von 40° bis 90° in Bezug auf die Reifenumfangsrichtung aufweisen.

## Revendications

1. Bandage pneumatique (10, 20, 30), comprenant :
une carcasse (14, 24, 34) s'étendant toroïdalement entre une paire de parties de talon (13, 23, 33);
une couche de câblés en spirale (1) agencée sur un côté externe, dans une direction radiale du bandage pneumatique, d'une partie de sommet de la carcasse (14, 24, 34) et dans lequel une couche supérieure (1A) et une couche inférieure (1B) sont formées en enroulant en spirale un câblé de renforcement (101, 102) ; et
une couche de ceinture auxiliaire (17, 27, 37a-d) agencée sur le côté externe, dans la direction radiale du bandage pneumatique, de la couche de câblés en spirale (1) ;
dans lequel, au moins au niveau des extrémités, dans une direction de la largeur du bandage pneumatique, d'une région dans laquelle la couche de câblés en spirale (1) et la couche de ceinture auxiliaire (17, 27, 37a-d) sont stratifiées, un module à 100% d'au moins un caoutchouc autre qu'un caoutchouc de revêtement de la couche de ceinture auxiliaire (17, 27, 37a-d), parmi les caoutchoucs disposés entre la couche de câblés en spirale (1) et la couche de ceinture auxiliaire (17, 27, 37a-d), est inférieur à un module à 100% du caoutchouc de revêtement de la couche de ceinture auxiliaire (17, 27, 37a-d) ;
**caractérisé en ce qu'**il comprend une couche de câblés en matériau de noyau (2) entre la couche supérieure (1A) et la couche inférieure (1B) de ladite couche de câblés en spirale (1).

2. Bandage pneumatique (10, 20, 30) selon la revendication 1, dans lequel :
le bandage pneumatique (10, 20, 30) comprend un caoutchouc intermédiaire entre la couche de câblés en spirale (1) et la couche de ceinture auxiliaire (17, 27, 37a-d) ; et
un module à 100% du caoutchouc intermédiaire est compris dans un intervalle représentant 20 à 95% du module à 100% du caoutchouc de revêtement de la couche de ceinture auxiliaire (17, 27, 37a-d) ;
dans lequel le terme « module à 100% » désigne la contrainte de traction à un allongement de 100% mesurée pour un échantillon en forme d'haltère no. 3 selon la norme JIS en exécutant un test de traction à température ambiante (25°C) et avec une vitesse de traction de 500 ± 29 mm/minute selon la norme JIS K6251.

3. Bandage pneumatique selon les revendications 1 ou 2, dans lequel un angle du câblé de renforcement de la couche de câblés en spirale (1) est compris dans un intervalle allant de 12° à 90° par rapport à la direction circonférentielle du bandage pneumatique.

4. Bandage pneumatique (10, 20, 30) selon l'une quelconque des revendications 1 à 3, dans lequel les câblés en matériau de noyau de la couche de câblés en matériau de noyau (2) forment un angle compris entre 40° et 90° par rapport à la direction circonférentielle du bandage pneumatique.
